# EUROPEAN PATENT SPECIFICATION

(11) **EP 2 772 644 B1**
(45) Date of publication and mention of the grant of the patent: **14.02.2018**
(21) Application number: 13157198.6
(22) Date of filing: 28.02.2013
(51) Int. Cl.: F03D 7/02

(54) **Wind turbine generator and operation method and control unit of the same**
Windturbinengenerator und Betriebsverfahren und Steuereinheit dafür
Générateur de turbine d'éolienne, procédé de fonctionnement et unité de commande de celui-ci

(43) Date of publication of application: 03.09.2014
(73) Proprietor: MITSUBISHI HEAVY INDUSTRIES, LTD., Tokyo 108-8215 (JP)
(72) Inventor: Koyanagi, Takuya, Tokyo 108-8215 (JP)
(74) Representative: Intès, Didier Gérard André

(56) References cited:
- WO-A1-2013/000468
- US-A1- 2006 125 241
- US-A1- 2007 024 058
- US-A1- 2012 205 912

## Description

### [Technical Field]

The present invention relates to a wind turbine generator and an operation method and a control unit of the wind turbine generator.

### [Background Art]

In recent years, wind turbine generators have come into wide use from a perspective of preserving the environment. A typical wind turbine generator is connected to the grid and configured to supply generated electric power to the grid.

A wind turbine generator normally operates in a wind speed range from a cut-in wind speed to a cut-out wind speed. When the wind speed is below the cut-in wind speed, the power generation is stopped and the operation is transferred to a standby state.

For instance, in Patent Literature 1, in a wind turbine generator having a generator driven by a wind turbine rotor and connected to the grid via a converter and an inverter, when the wind speed drops below the power generatable wind speed range, a power generation operation of the generator is stopped and the operation is transferred to an operation standby mode.

Although not related to changing over to a standby state of the wind turbine generator (an operation standby mode), described in Patent Literature 2 is a method for starting the wind turbine generator in a steady manner by reducing a pitch angle and preventing stall of the blade, in the case where a rotation speed of the rotor fails to follow pitch angle change of the blade during acceleration of the wind turbine rotor when starting the wind turbine generator.

### [Citation List]

### [Patent Literature]

[PTL 1]
   JP8-322298 A
[PTL2]
   WO 2011/086691

### [Summary of Invention]

### [Technical Problem]

In the case of Patent Literature 1 where the operation is transferred to the operation standby mode when the wind speed drops below the power generatable wind speed range, every time the wind speed exceeds or drops below the cut-in wind speed, the generator must be connected or disconnected from the grid. A circuit breaker between the generator and the grid is frequently opened or closed and this results in deterioration of life of the circuit breaker.

Further, in the case of a wind turbine generator equipped with a synchronous generator, in order to change the operation state back to the power generation mode from the operation standby mode, it is necessary to synchronize the generator with the grid using a synchronizer before connecting the generator to the grid. Thus, it is difficult to resume the power generation immediately even when the wind speed increases.

Further, although the method for starting the wind turbine generator in a steady manner, Patent Literature 2 fails to describe how to reduce frequency of connecting or disconnecting the generator with respect o the grid.

It is an object of at least one embodiment of the present invention to provide a wind turbine generator, and an operation method and a control unit for the wind turbine generator that are capable of reducing frequency of connecting or disconnecting the generator with respect to the grid.

### [Solution to Problem]

A wind turbine generator according to at least one embodiment of the present invention comprises:
a rotor configured to rotate upon receiving wind;
a generator for converting rotational energy of the rotor to electric power;
a circuit breaker for changing a connection state of the generator to a grid;
a circuit breaker controller for controlling opening and closing of the circuit breaker when output of the generator becomes less than a lower limit based on a prediction result of whether or not the output of the generator returns to a value at or above the lower limit in a time frame from a present point to a future point,
wherein the circuit breaker controller is configured to: maintain such a state that the generator is connected to the grid, by closing the circuit breaker, when it is predicted that the output returns to a value at or above the lower limit in the time frame; and disconnect the generator from the grid by opening the circuit breaker, when it is predicted that the output continues to remain less than the lower limit in the time frame.

According to the above wind turbine generator, when the output of the generator drops below the lower limit due to wind speed decline, the connection state of the generator with respect to the grid is determined based on the prediction result of whether or not the output of the generator returns to a value at or above the lower limit in the prescribed time frame. In other words, even when the output of the generator drops below the lower limit due to the wind speed decline, instead of unconditionally disconnecting the generator from the grid, it is determined whether or not the generator is to be disconnected by considering the prediction result on whether or not the output of the generator returns to a value at or above the lower limit within the prescribed time frame. Therefore, it is possible to achieve prompt restart of power generation and enhanced life of the circuit breaker as well as reduction of power consumption due to motoring of the generator. Herein, "motoring" of the generator means to operate the generator temporarily as a motor using electric power supplied from the grid.

More specifically, in the above wind turbine generator, even when the output of the generator drops below the lower limit due to the wind speed decline, if it is predicted that the output of the generator returns to a value at or above the lower limit in the prescribed time frame, the state where the generator is connected to the grid is maintained by controlling the circuit breaker using the circuit breaker controller. Thus, when the output of the generator returns to a value at or above the lower limit in the time frame due to wind speed recovery, it is possible to promptly restart power generation by the generator as the generator is already connected to the grid. Further, the frequency of connecting or disconnecting the generator with respect to the grid is reduced. This improves life of the circuit breaker. In contrast, if it is predicted that the output of the generator continues to remain below the lower limit in the time frame, the generator is disconnected from the grid by controlling the circuit breaker using the circuit breaker controller. As a result, situations such as when the electric power from the grid is wasted by motoring of the generator in such a state that the generator is maintained connected to the grid although there is little possibility that the output of the generator returns to a value at or above the lower limit by wind speed recovery.

Further, in one embodiment, the generator is a synchronous generator.

In the case where the generator of the wind turbine generator is a synchronous generator, there is no need for complicated synchronization process by a synchronizer when connecting the generator to the grid. Thus, it is advantageous that connection of the generator to the grid is maintained without disconnecting the generator from the grid when it is predicted that the output of the generator returns to a value at or above the lower limit in the prescribed time frame.

In addition, the above wind turbine generator further comprises:
a prediction unit for predicting whether or not the output of the generator returns to a value at or above the lower limit in the time frame based on at least one of a future wind speed impinging on the rotor or at least one physical quantity that affects the future wind speed, and
the circuit breaker controller is configured to control opening and closing of the circuit breaker based on a prediction result by the prediction unit.

In this case, it is predicted in the prediction unit whether or not the output of the generator returns to a value at or above the lower limit in the time frame based on the future wind speed or the physical quantity. With the prediction result in consideration, opening and closing of the circuit breaker is controlled, hence achieving good balance of improving prompt restart of power generation and life of the circuit breaker and reducing power consumption due to motoring of the generator.

In one embodiment, the above wind turbine generator further comprises:
a future wind speed obtaining unit for obtaining the future wind speed, and
the prediction unit is configured to predict whether or not the output of the generator returns to a value at or above the lower limit in the time frame, based on at least the future wind speed obtained by the future wind speed obtaining unit.

The wind speed (the future wind speed) that will impinge on the rotor in the future, significantly affects the output of the generator at a future point. Thus, by considering at least the future wind speed obtained by the future wind speed obtaining unit as described above, prediction accuracy by the prediction unit is improved. Therefore, by controlling opening and closing of the circuit breaker based on this prediction result, it is possible to achieve good balance of prompt restart of power generation and enhanced life of the circuit breaker and reduced power consumption due to motoring of the generator.

Further, the at least one physical quantity may include weather information of a peripheral area of the wind turbine generator, and the prediction unit may be configured to predict whether or not the output of the generator returns to a value at or above the lower limit in the time frame, based on at least the weather information.

Furthermore, the at least one physical quantity may include power output of another wind turbine generator located on an upwind side of the wind turbine generator, and the prediction unit may be configured to predict whether or not the output of the generator returns to a value at or above the lower limit in the time frame, based on at least the power output of said another wind turbine generator.

In the case of using the physical quantity affecting the future wind speed (the weather information of the peripheral area of the wind turbine generator and the power output of another wind turbine generator) as described in these embodiments, it is possible to predict, with a simple structure, whether or not the output of the generator returns to a value at or above the lower limit within the prescribed time frame.

In some embodiments, the above wind turbine generator further comprises:
a correlation obtaining unit for obtaining a correlation between the at least one of the future wind speed or the at least one physical quantity and a period for the output of the generator to return to a value at or above the lower limit; and
a threshold setting unit for setting a threshold value of at least one of the future wind speed or the at least one physical quantity by applying to the correlation an allowable continuation time of such a state that the generator whose output is less than the lower limit is connected to the grid,
wherein the prediction unit is configured to predict whether or not the output of the generator returns to a value at or above the lower limit in the time frame by comparing the at least one of the future wind speed or the at least one physical quantity with the threshold value.

Depending on weather condition in each site where the wind turbine generator is arranged and a correlation between the future wind speed or the physical quantity and the actual output of the generator, it is difficult in some cases to uniquely set the threshold value of the future wind speed or the physical quantity, which determines the connection state of the generator with respect to the grid. Even in such cases by providing the correlation obtaining unit and the threshold setting as described above, it is possible to appropriately control opening and closing of the circuit breaker in accordance with the allowable continuation time (the allowable motoring time) of such a state that the generator whose output is below the lower limit is connected to the grid.

The allowable continuation time (the allowable motoring time) may be determined to maximize an amount of the power output obtained by restarting the power generating early minus the electric power used for motoring of the generator, or may be determined according to specifications from an operator of the grid 6.

According to at least one embodiment of the present invention, an operation method for a wind turbine generator comprising: a rotor configured to rotate upon receiving wind; a generator for converting rotational energy of the rotor to electric power; and a circuit breaker for changing a connection state of the generator to a grid, comprises:
a circuit breaker control step of controlling opening and closing of the circuit breaker when output of the generator becomes less than a lower limit based on prediction result of whether or not the output of the generator returns to a value at or above the lower limit in a time frame from a present point to a future point,
in the circuit breaker control step, when it is predicted that the output returns to a value at or above the lower limit in the time frame, such a state that the generator is connected to the grid is maintained by closing the circuit breaker, and
when it is predicted that the output continues to remain less than the lower limit in the time frame, the generator is disconnected from the grid by opening the circuit breaker.

In the above operation method for the wind turbine generator, even when the output of the generator drops below the lower limit due to the wind speed decline, instead of unconditionally disconnecting the generator from the grid, it is determined whether or not the generator is to be disconnected by considering the prediction result on whether or not the output of the generator returns to a value at or above the lower limit within the prescribed time frame. Therefore, it is possible to achieve prompt restart of power generation and enhanced life of the circuit breaker as well as reduction of power consumption due to motoring of the generator.

In addition, the above operation method for the turbine generator further comprises:
a prediction step of predicting whether or not the output of the generator returns to a value at or above the lower limit in the time frame based on at least one of a future wind speed impinging on the rotor or at least one physical quantity that affects the future wind speed, and
in the circuit breaker control step, opening and closing of the circuit breaker is controlled based on a prediction result of the prediction step.

In this case, it is predicted in the prediction step whether or not the output of the generator returns to a value at or above the lower limit in the time frame based on the future wind speed or the physical quantity. With the prediction result in consideration, opening and closing of the circuit breaker is controlled, hence achieving good balance of improving prompt restart of power generation and life of the circuit breaker and reducing power consumption due to motoring of the generator.

In one embodiment, the above operation method for the turbine generator further comprises:
a future wind speed obtaining step of obtaining the future wind speed, and
in the prediction step, it is predicted whether or not the output of the generator returns to a value at or above the lower limit in the time frame, based on at least the future wind speed obtained in the future wind speed obtaining step.

In this manner, the future wind speed which is strongly correlated with the output of the generator at the future point is obtained in the future wind speed obtaining step. Thus, by considering at least this future wind speed, prediction accuracy in the prediction step is improved. Therefore, by controlling opening and closing of the circuit breaker based on this prediction result, it is possible to achieve good balance of prompt restart of power generation and enhanced life of the circuit breaker and reduced power consumption due to motoring of the generator.

Further, the at least one physical quantity may include weather information of a peripheral area of the wind turbine generator, and
in the prediction step, it may be predicted whether or not the output of the generator returns to a value at or above the lower limit in the time frame, based on at least the weather information.

Furthermore, the at least one physical quantity may include power output of another wind turbine generator located on an upwind side of the wind turbine generator, and
in the prediction step, it may be predicted whether or not the output of the generator returns to a value at or above the lower limit in the time frame, based on at least the power output of said another wind turbine generator.

In the case of using the physical quantity affecting the future wind speed (the weather information of the peripheral area of the wind turbine generator and the power output of another wind turbine generator) as described in these embodiments, it is possible to predict, with a simple structure, whether or not the output of the generator returns to a value at or above the lower limit within the prescribed time frame.

In some embodiments, the above operation method for the turbine generator further comprises:
a correlation obtaining step of obtaining a correlation between the at least one of the future wind speed or the at least one physical quantity and time that it has taken for the output of the generator to return to a value at or above the lower limit; and
a threshold setting step of setting a threshold value of at least one of the future wind speed or the at least one physical quantity by applying to the correlation an allowable continuation time of such a state that the generator whose output is less than the lower limit is connected to the grid, and
in the prediction step, it is predicted whether or not the output of the generator returns to a value at or above the lower limit in the time frame by comparing the at least one of the future wind speed or the at least one physical quantity with the threshold value.

As a result, it is possible to appropriately control opening and closing of the circuit breaker in accordance with the allowable continuation time (the allowable motoring time) of such a state that the generator whose output is below the lower limit is connected to the grid.

According to at least one embodiment of the present invention, a control unit for a wind turbine generator comprising: a rotor configured to rotate upon receiving wind; a generator for converting rotational energy of the rotor to electric power; and a circuit breaker for changing a connection state of the generator to a grid, comprises:
a circuit breaker controller for controlling opening and closing of the circuit breaker when output of the generator becomes less than a lower limit based on a prediction result of whether or not the output of the generator returns to a value at or above the lower limit in a time frame from a present point to a future point, and
a prediction unit for predicting whether or not the output of the generator returns to a value at or above the lower limit in the time frame based on at least one of a future wind speed impinging on the rotor or at least one physical quantity that affects the future wind speed;
and the circuit breaker controller is configured to:
   maintain such a state that the generator is connected to the grid by closing the circuit breaker, when it is predicted that the output returns to a value at or above the lower limit in the time frame; disconnect the generator from the grid by opening the circuit breaker, when it is predicted that the output continues to remain less than the lower limit in the time frame; and control opening and closing of the circuit breaker based on a prediction result by the prediction unit.

According to the above control unit, even when the output of the generator drops below the lower limit due to the wind speed decline, instead of unconditionally disconnecting the generator from the grid, it is determined whether or not the generator is to be disconnected by considering the prediction result on whether or not the output of the generator returns to a value at or above the lower limit within the prescribed time frame. Therefore, it is possible to achieve prompt restart of power generation and enhanced life of the circuit breaker as well as reduction of power consumption due to motoring of the generator.

### [Effects of The Invention]

According to at least one embodiment of the present invention, even when the output of the generator drops below the lower limit due to the wind speed decline, instead of unconditionally disconnecting the generator from the grid, it is determined whether or not the generator is to be disconnected by considering the prediction result on whether or not the output of the generator returns to a value at or above the lower limit within the prescribed time frame. Therefore, it is possible to achieve prompt restart of power generation and enhanced life of the circuit breaker as well as reduction of power consumption due to motoring of the generator.

### [Brief Description of Drawings]

[FIG.1]

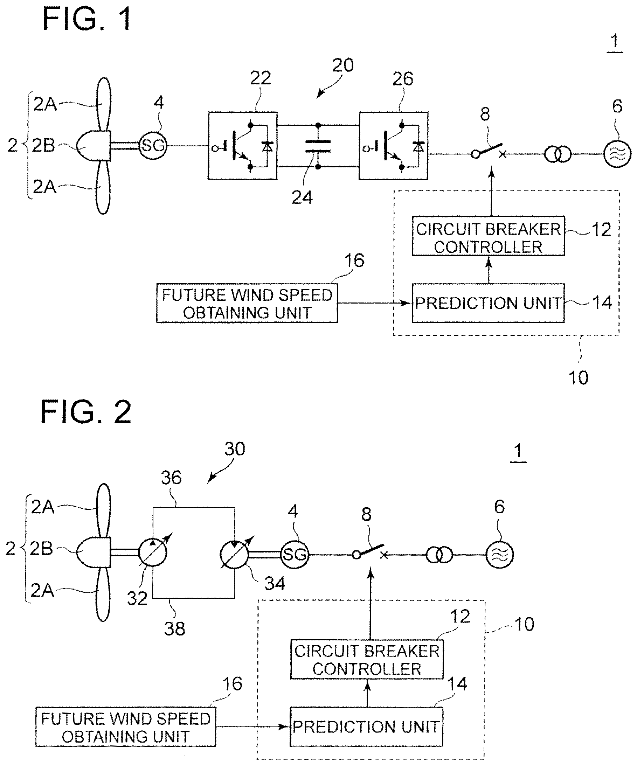

   FIG.1 is an illustration of a wind turbine generator according to an embodiment.
[FIG.2]
   FIG.2 is an illustration of a wind turbine generator according to an embodiment.
[FIG.3]

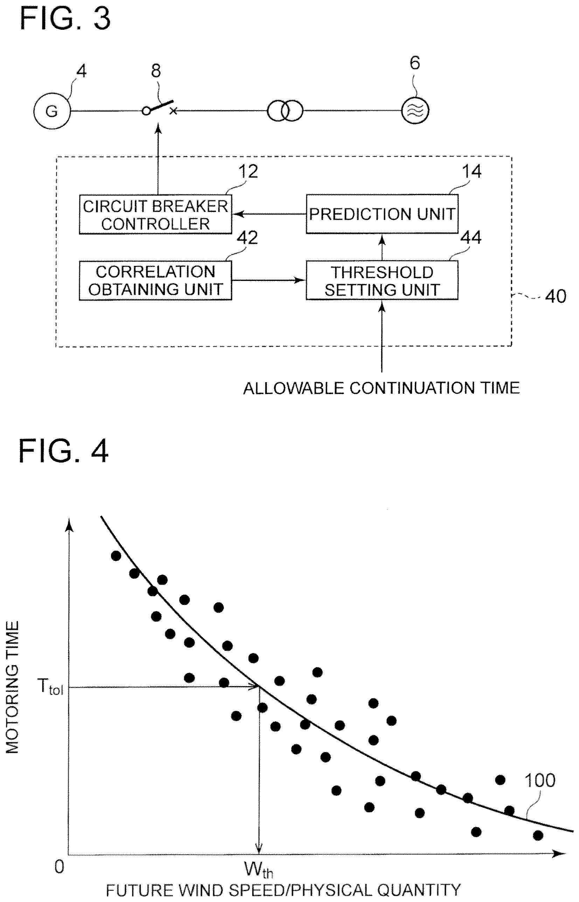

   FIG.3 is a block diagram illustrating a control unit of the wind turbine generator according to an embodiment.
[FIG.4]
   FIG.4 is an explanatory figure for illustrating a principle of setting a threshold value by a threshold setting unit according to an embodiment.
[FIG.5]

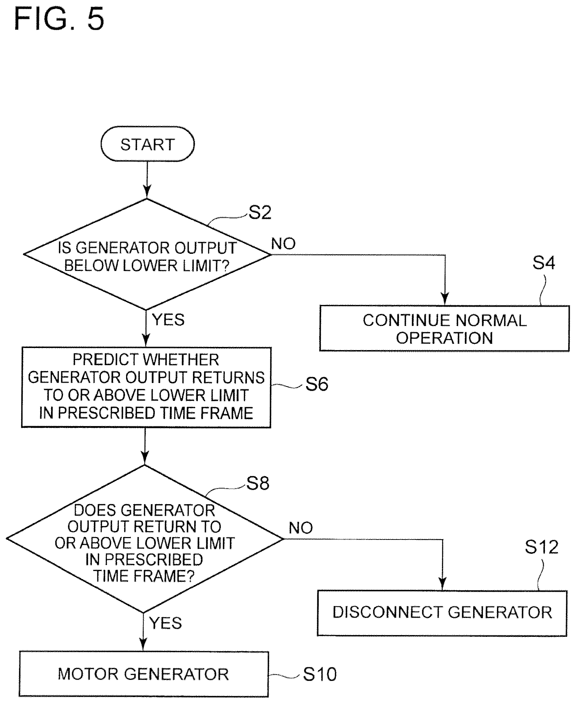

   FIG.5 is a flow chart illustrating an operation method of the wind turbine generator according to an embodiment.
[FIG.6]

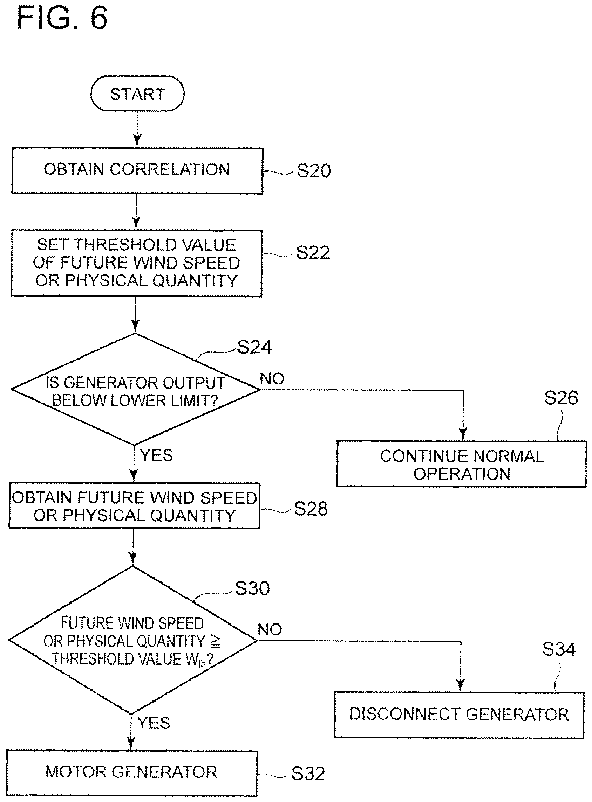

   FIG.6 is a flow chart illustrating an operation method of the wind turbine generator according to an embodiment.
[FIG.7]

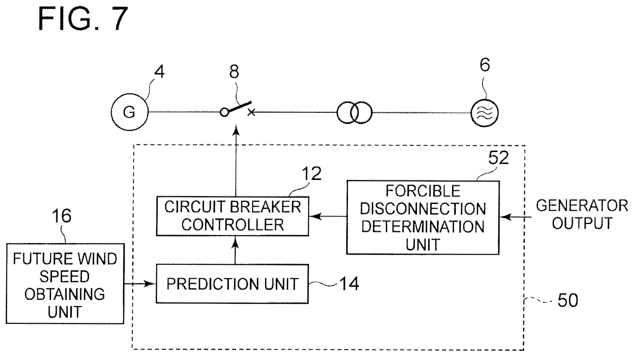

   FIG.7 is a block diagram of the control unit of the wind turbine generator according to an embodiment.

### [Description of Embodiments]

An embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

FIG.1 is an illustration of a wind turbine generator according to an embodiment. FIG.2 is an illustration of a wind turbine generator according to another embodiment.

As illustrated in FIG.1 and FIG.2, a wind turbine generator 1 is provided with a rotor 2, a generator 4 for converting rotational energy of the rotor 2 to electric power, and a circuit breaker 8 for changing a connection state of the generator 4 to the grid 6.

The rotor 2 includes at least one blade 2A, and a hub 2B to which the blade 2A is mounted.
The rotor 2 is configured to be rotated by wind energy received by the blade 2A. Opening and closing of the circuit breaker 8 is controlled by a circuit breaker controller 12 of the control unit so as to change the connection state of the generator 4 between: a disconnected state where the generator 4 is disconnected from the grid 6; and a connected state where the generator 4 is connected to the grid 6. The circuit breaker controller 12 is described later.

In this embodiment illustrated in FIG.1, the wind turbine generator is a direct drive wind turbine in which the synchronous generator 4 is directly connected to the rotor 2 without a speed increasing mechanism. An armature of the synchronous generator 4 is connected to the grid 6 via an AC-DC-AC link 20 and the circuit breaker 8. Herein, the AC-DC-AC link 20 is formed by a converter 22, a DC bus 24 and an inverter 26.

Further, in the embodiment illustrated in FIG.1, the synchronous generator 4 may be a permanent magnet synchronous generator having a permanent magnet as a field magnet, or a synchronous generator equipped with an exciter for supplying excitation current to the permanent magnet.

In another embodiment illustrated in FIG.2, the wind turbine generator 1 is a hydraulic drive wind turbine in which the synchronous generator 4 is connected to the rotor 2 via a hydraulic transmission 30. An armature of the synchronous generator 4 is connected to the grid 6 without an electric power converter such as an inverter and a converter. However, between the synchronous generator 4 and the grid 6, devices other than the electric power converter (the circuit breaker 8, a transformer, etc) may be provided.

The hydraulic transmission 30 includes a hydraulic pump 32 of a variable displacement type which is driven by the rotor 2, and a hydraulic motor 34 of a variable displacement type which is driven by pressurized oil produced by the hydraulic pump 32. The hydraulic pump 32 and the hydraulic motor 34 are connected to each other via a high pressure oil line 36 and a low pressure oil line 38. Thus, operating oil (high pressure oil) discharged from the hydraulic pump 32 is supplied to the hydraulic motor 34 via the high pressure oil line 36 to perform work in the hydraulic motor 34 and then the operating oil (low pressure oil) having performed work in the hydraulic motor 34 is returned to the hydraulic pump 32 via the low pressure oil line 38. Further, an oil tank for reserving the operating oil may be connected to the low pressure oil line 38. Furthermore, an accumulator may be provided in the high pressure oil line 36 for the purposes of preventing pulsation in the high pressure oil line 36, reserving the high pressure oil produced by the hydraulic pump 32, absorbing a difference between a discharge amount of the hydraulic pump 32 and an intake amount of the hydraulic motor 34, etc.

Moreover, in the embodiment illustrated in FIG.2, the synchronous generator 4 may be a permanent magnet synchronous generator having a permanent magnet as a field magnet, or a synchronous generator equipped with an exciter for supplying excitation current to the permanent magnet.

In another embodiment, the generator is an induction generator. In this case, a speed increaser may be provided between the rotor 2 and the generator (the induction generator) 4, a stator winding of the generator (the induction generator) 4 may be directly connected to the grid 6, and a rotor winding of the generator (the induction generator) 4 may be connected to the grid via the AC-DC-AC converter.

The control unit 10 is provided with a circuit breaker controller 12 for controlling opening and closing of the circuit breaker 8. In some embodiments, the circuit breaker controller 12 controls opening and closing of the circuit breaker 8 when output of the generator 4 drops below a lower limit due to wind speed decline, based on a prediction result of whether or not the output of the generator 4 returns to a value at or above the lower limit in a time frame from a present point to a future point.

Further, the lower limit of the output of the generator 4 may be output of the generator 4 corresponding to a wind speed at which power generation starts (cut-in wind speed). Further, the time frame is a criterion for controlling opening and closing of the circuit breaker 8 and the time frame may be an allowable continuation time of such the state where the generator 4 whose output is below the lower limit is connected to the grid 6 (monitoring allowance time).

Furthermore, it is possible to directly determine whether or not the output of the generator 4 drops below the lower limit by comparing an actual output of the generator and the lower limit of the output of the generator. Further, it is also possible to determine whether or not the output of the generator 4 drops below the lower limit, from a physical quantity directly relating to the output of the generator 4 such as the electric current of the generator 4 and displacement or the number of operating cylinders of the hydraulic pump 32 or the hydraulic motor 34. It may be possible to determine whether or not the output of the generator 4 drops below the lower limit, using a physical quantity by which the output of the generator can be indirectly estimated, such as the rotation speed of the rotor 2 and the wind speed impinging on the rotor 2. The actual output of the generator can be calculated from result of measuring the electric current and voltage at an appropriate position between the generator 4 and the grid 6.

More specifically, when it is predicted that the output of the generator 4 will return to a value at or above the lower limit in the time frame, the circuit breaker controller 12 maintains the state where the generator 4 is connected to the grid 6, by closing the circuit breaker 8. On the other hand, when it is predicted that the output of the generator 4 continues to remain below the lower limit in the time frame, the circuit breaker controller 12 disconnects the generator 4 from the grid 6 by opening the circuit breaker 8.

In some embodiments, as illustrated in FIG.1 and FIG.2, the control unit 10 is further provided with a prediction unit 14. The prediction unit 14 is configured to predict whether or not the output of the generator 4 returns to a value at or above the lower limit in the time frame based on at least one of a future wind speed impinging on the rotor 2 or at least one physical quantity that affects the future wind speed. Further, the circuit breaker controller 12 is configured to control opening and closing of the circuit breaker 8 based on the prediction result by the prediction unit 14. The at least one physical quantity that affects the future wind speed impinging on the rotor 2 indicates a quantity that correlate with the future wind speed and is objectively measurable.

In this case, based on the future wind speed or the physical quantity affecting the future wind speed, it is predicted in the prediction unit 14 whether or not the output of the generator 4 returns to a value at or above the lower limit in a prescribed time frame. With the prediction result in consideration, opening and closing of the circuit breaker 8 is controlled, hence achieving good balance of prompt restart of power generation and enhanced life of the circuit breaker 8 and reduced power consumption due to motoring of the generator 4.

In some embodiments, as illustrated in FIG.1 and FIG.2, the wind turbine generator 1 is further provided with a future wind speed obtaining unit 16 for obtaining a speed of wind that will impinge on the rotor 2 in the future, i.e. the future wind speed. The prediction unit 14 predicts whether or not the output of the generator 4 returns to a value at or above the lower limit in the time frame, based on at least the future wind speed obtained by the future wind speed obtaining unit 16.

The wind speed (the future wind speed) that will impinge on the rotor 2 in the future, significantly affects the output of the generator at a future point. Thus, by considering at least the future wind speed obtained by the future wind speed obtaining unit 16 as described above, prediction accuracy by the prediction unit 14 is improved. Therefore, by controlling opening and closing of the circuit breaker 8 based on this prediction result, it is possible to achieve good balance of improving prompt restart of power generation and life of the circuit breaker 8 and reducing power consumption due to motoring of the generator 4.

In one embodiment, the future wind speed obtaining unit 16 includes a forward anemometer for measuring a wind speed at a distant position (a measuring position) on an upwind side of the rotor 2. The measured wind speed obtained by the forward anemometer indicates a wind speed that reaches the rotor 2 at a future point after time determined based on the distance between the measuring position and the rotor 2 and the wind speed. The forward anemometer may be a measuring device for obtaining the wind speed from a frequency shift (Doppler shift) between electromagnetic wave (e.g. laser beam) emitted to the measuring position and the scattered light from aerosols in the atmosphere at the position. As a particular example of this type of forward anemometer, there is LIDAR. Alternatively, the forward anemometer may be an anemometer of an appropriate measuring method that is arranged at the distant position on the upwind side of the rotor 2. Further, in a wind turbine group formed by a plurality of wind turbine generators 1, the wind turbine generators 1 may share at least one forward anemometer such as LIDAR.

Further, the future wind speed obtaining unit 16 may also include a measuring value correction part for correcting the measurement result from the forward anemometer (the future wind speed at the measuring position), for the purpose of considering maintainability of the wind speed till it reaches the rotor 2 from the measuring position and of compensating for the measuring position shift caused by vibration of the tower of the wind turbine generator 1.

In another embodiment, the future wind speed obtaining unit 16 is configured to receive a prediction value of the wind speed impinging on the rotor 2 in the future (the future wind speed) from outside the wind turbine generator 1. For instance, the future wind speed obtaining unit 16 may receive the prediction value of the wind speed predicted based on meteorology from private companies and government agencies.

In this case, the future wind speed obtaining unit 16 may output the predicted wind speed received from the outside as is to the prediction unit 14 as the future wind speed, or may correct the predicted wind speed received from the outside and then output the corrected wind speed to the prediction unit 14 as the future wind speed.

In the case where the prediction unit 14 considers at least one physical quantity which affects the future wind speed impinging on the rotor 2, the at least one physical quantity may include weather information of a peripheral area of the wind turbine generator 1 (e.g. pressure distribution and wind speed distribution in the peripheral area at the present point and the like). More specifically, the prediction unit 14 may be configured to predict whether or not the output of the generator 4 returns to a value at or above the lower limit in the time frame, based on at least the weather information.

Further, in the case where the prediction unit 14 considers at least one physical quantity which affects the future wind speed impinging on the rotor 2, the at least one physical quantity may include power output of another wind turbine generator located on the upwind side of the wind turbine generator 1. More specifically, the prediction unit 14 may be configured to predict whether or not the output of the generator 4 returns to a value at or above the lower limit in the time frame, based on at least the power output of the another wind turbine generator. "Another wind turbine generator" may be another wind turbine generator belonging to the same wind farm as the wind turbine generator 1.

In this manner, in the case of using the physical quantity affecting the future wind speed (the weather information of the peripheral area of the wind turbine generator 1 and the power output of another wind turbine generator), it is possible to predict, with a simple structure, whether or not the output of the generator 4 returns to a value at or above the lower limit within the prescribed time frame.

FIG.3 is a block diagram illustrating the control unit of the wind turbine generator 1 according to another embodiment. The same reference numerals are given in FIG.3 without adding explanations for those configurations that are the same as FIG.1 and FIG.2.

In this example illustrated in FIG.3, the control unit 40 is further provided with a correlation obtaining unit 42 and a threshold setting unit 44 in addition to the circuit breaker controller 12 and the predicting unit 14. The correlation obtaining unit 42 is configured to obtain a correlation between: the at least one of the future wind speed or the at least one physical quantity; and a period for the output of the generator 4 to return to a value at or above the lower limit. Further, the threshold setting unit 44 is configured to set the threshold value of at least one of the future wind speed or the at least one physical quantity by applying an allowable value of the continuation time of the state where the generator 4 whose output is below the lower limit is connected to the grid 6 (allowable continuation time) to the correlation obtained by the correlation obtaining unit 42. Herein, the allowable continuation time means an allowable value of the continuation time for motoring of the generator 4 by consuming electric power supplied from the grid 6, i.e. allowable motoring time. For instance, the allowable continuation time (allowable motoring time) may be determined to maximize an amount of the power output obtained by restarting the power generating at an early stage (power output that might be lost if the generator 4 is not motored) minus the electric power consumed for motoring the generator 4, or may be determined according to specifications from an operator of the grid 6. Then, in the control unit 40, the prediction unit 14 predicts whether or not the output of the generator 4 returns to a value at or above the lower limit in the allowable continuation time frame, by comparing at least one of the future wind speed or the at least one physical quantity with the threshold value set by the threshold setting unit 44.

Depending on weather condition in each site where the wind turbine generator is arranged and a correlation between the future wind speed or the physical quantity and the actual output of the generator 4, it is difficult in some cases to uniquely set the threshold value of the future wind speed or the physical quantity, which determines the connection state of the generator 4 to the grid 6. More specifically, it is desirable to determine the threshold value of the future wind speed or the physical quantity by considering difference of wind condition of each site. However, it takes significant labor and time to obtain an appropriate threshold value for each of the sites by trial and error. Further, depending on g maintainability of the wind speed till the wind reaches the rotor 2 from the measuring position where the wind speed is measured by the forward anemometer such as LIDAR, an appropriate threshold value of the future wind speed or the physical quantity is affected and thus, it is even more difficult to uniquely set the threshold value of the future wind speed or the physical quantity.

Even in these cases where it is difficult to set in advance the threshold value of the future wind speed or the physical quantity, it is still possible to set the appropriate threshold value by providing the correlation obtaining unit 42 and the threshold setting 44 as described above. Therefore, it is possible to appropriately control opening and closing of the circuit breaker 8 in accordance with the allowable continuation time (the allowable motoring time) of such a state that the generator 4 whose output is less than the lower limit is connected to the grid 6. It is possible to adjust the threshold value automatically by automating processes performed by the correlation obtaining unit 42 and the threshold setting unit 44.

FIG.4 is an explanatory figure for illustrating a principle of setting the threshold value by the threshold setting unit 44 according to an embodiment. The horizontal axis in FIG.4 indicates the future wind speed or the physical quantity at a point when the output of the generator 4 drops below the lower limit. The vertical axis in FIG.4 indicates a period for the output of the generator 4 to return to a value at or exceed the lower limit from the point the output of the generator 4 drops below the lower limit, i.e. the motoring time.

In one embodiment, the correlation between: one of the future wind speed or at least one of the physical quantity at the point when the output of the generator 4 drops below the lower limit; and the period for the output of the generator 4 to return to a value at or above the lower limit from the point (the motoring time) is obtained by the correlation obtaining unit 42. The correlation obtained by the correlation obtaining unit 42 may be a function representing an approximate curve 100 of a variety of past data as shown in FIG.4. In one embodiment, the correlation obtaining unit 42 includes a memory in which the function indicating the approximate curve 100 is stored beforehand. In another embodiment, the correlation obtaining unit 42 includes: a memory for storing past data regarding the motoring time and the future wind speed or the physical quantity at the point when the output of the generator 4 drops below the lower limit; and a calculation unit for calculating the function indicating the approximate curve 100 by retrieving the past data stored in the memory. Further, the correlation obtaining unit 42 may be configured to continue storing past data in the memory and obtain the function indicating the approximately curve 100 from the past data stored in the memory so as to regularly update the function.

In the threshold setting unit 44, the allowable continuation time (the allowable motoring time) Tₜₒₗ is applied to the function indicating the approximate curve 100 obtained by the correlation obtaining unit 42 so as to set the threshold value Wₜₕ of the future wind speed or at least one physical quantity. The threshold value Wₜₕ obtained in this manner is used for prediction performed by the prediction unit 14 on whether or not the output of the generator 4 returns to or exceeds the lower limit within the allowable continuation time frame. More specifically, in the prediction unit 14, at least one of the future wind speed or the at least one physical quantity is compared with the threshold value set by the threshold setting unit 44, and based on the comparison result, it is predicted whether or not the output of the generator 4 returns to a value at or above the lower limit within the allowable continuation time frame.

The operation method of the wind turbine generator 1 is described in reference to FIG.5 and FIG.6.

FIG.5 is a flow chart illustrating the operation method of the wind turbine generator 1 according to an embodiment.

In the exemplary embodiment illustrated in the drawing, first it is determined whether or not the output of the generator 4 has dropped below the lower limit in step S2. If the output of the generator 4 is not less than the lower limit (and the wind speed is not less than the cut-out wind speed), the process advances to step S4 to continue normal operation of the wind turbine generator 1. On the other hand, if the output of the generator 4 is below the lower limit, the process advances to step S6.

Herein, determination on whether or not the output of the generator 4 has dropped below the lower limit may be performed directly by comparing the actual output of the generator 4 with the lower limit of the output of the generator 4, or performed indirectly based on the result of comparing the wind speed impinging on the rotor 2 with below the cut-in wind speed. Further, the actual output of the generator 4 can be calculated from measurement results of electric current and voltage at an appropriate point between the generator 4 and the grid 6.

In step S6, it is predicted whether or not the output of the generator 4 returns to or exceeds the lower limit within a prescribed time frame. In some embodiments, it is predicted whether or not the output of the generator 4 returns to or exceeds the lower limit in the time frame based on at least one of a future wind speed impinging on the rotor 2 and at least one physical quantity that affects the future wind speed. In some embodiments, in step S6, the wind speed that will impinge on the rotor 2 in the future (the future wind speed) is obtained, and based on at least this future wind speed, it is predicted whether or not the output of the generator 4 returns to or exceeds the lower limit in the time frame.

In one embodiment, a wind speed at a distant position (the measuring position) on an upwind side of the rotor 2 is measured using the forward anemometer such as LIDAR, and this wind speed is used as the future wind speed for the prediction performed in step S6. In this case, the measurement result by the forward anemometer may be used as is as the future wind speed for the prediction in step S6, or may be corrected for the purpose of considering maintainability of the wind speed till it reaches the rotor 2 from the measuring position and of compensating for the measuring position shift caused by vibration of the tower of the wind turbine generator 1 before being used for the prediction in step S6.

In another embodiment, in step S6, a prediction value of the wind speed (the future wind speed) that will impinge on the rotor 2 in the future is received from the outside of the wind turbine generator 1 and the prediction value of the wind speed is used as is for the prediction performed in step S6 as the future wind speed. In this case, the prediction value of the wind speed received from the outside may be used as is for the prediction performed in step S6 as the future wind speed, or may be corrected and then used as the future wind speed for the prediction performed in step S6.

In the case of considering in step S6 at least one physical quantity that affects the future wind speed impinging on the rotor 2, the at least one physical quantity may include weather information of a peripheral area of the wind turbine generator 1 (e.g. pressure distribution and wind speed distribution in the peripheral area at the present point and the like). More specifically, the prediction on whether or not the output of the generator 4 returns to a value at or above the lower limit in the time frame may be performed in step S6 based on at least the weather information.

Further, in the case of considering in step S6 at least one physical quantity which affects the future wind speed impinging on the rotor 2, the at least one physical quantity may include power output of another wind turbine generator located on the upwind side of the wind turbine generator 1. More specifically, the prediction on whether or not the output of the generator 4 returns to a value at or above the lower limit in the time frame may be performed in step S6 based on at least the power output of the another wind turbine generator. "Another wind turbine generator" may be another wind turbine generator belonging to the same wind farm as the wind turbine generator 1.

Then, if it is predicted that the output of the generator 4 returns to a value at or above the lower limit in the prescribed time frame (YES in step S8), the process advances to step S10 to close the circuit breaker 8 and maintain the state where the generator 4 is connected to the grid 6 without being disconnected. This indicates to operate the generator 4 temporarily as an electric motor by using electric power supplied from the grid 6 (i.e. motoring of the generator 4).

In contrast, if it is predicted that the output of the generator 4 continues to remain below the lower limit in the time frame (NO in step S8), the process advances to step S12 to disconnect the generator 4 from the grid by opening the circuit breaker 8.

FIG.6 is a flow chart illustrating the operation method of the wind turbine generator 1 according to another embodiment.

In this exemplary embodiment illustrated in the drawing, the correlation between: one of the future wind speed or at least one of the physical quantity; and the period for the output of the generator 4 to return to a value at or above the lower limit from the point is obtained (step S20). More specifically, the correlation between: one of the future wind speed or at least one of the physical quantity at the point when the output of the generator 4 drops below the lower limit; and the period for the output of the generator 4 to return to a value at or above the lower limit from the point (the motoring time) is obtained. The correlation obtained in step S20 may be a function representing the approximate curve 100 of a variety of past data as shown in FIG.4.

Next, in step S22, the allowable continuation time (the allowable motoring time) of the state where the generator 4 whose output is below the lower limit is connected to the grid 6, is applied to correlation obtained by the correlation obtaining unit 42 to set the threshold value of at least one of the future wind speed or at least one physical quantity. In one embodiment, in step S22, the allowable continuation time (the allowable motoring time) Tₜₒₗ is applied to the function indicating the approximate curve 100 obtained by the correlation obtaining unit 42 so as to set the threshold value Wₜₕ of the future wind speed or at least one physical quantity.

Further, the threshold value Wₜₕ of the future wind speed or at least one physical quantity may be regularly updated by repeating step S20 and step S22 during operation of the wind turbine generator.

In step S24 and step S26 are substantially the same as step S2 and S4 of FIG.5. More specifically, it is determined whether or not the output of the generator 4 has dropped below the lower limit in step S24. If the output of the generator 4 is not less than the lower limit (and the wind speed is not less than the cut-out wind speed), the process advances to step S26 to continue normal operation of the wind turbine generator 1. On the other hand, if the output of the generator 4 drops below the lower limit, the process advances to step S28.

In step S28, at lest one physical quantity that affects the future wind speed impinging on the rotor 2 is obtained.

In one embodiment, a wind speed at a distant position (the measuring position) on an upwind side of the rotor 2 is measured using the forward anemometer such as LIDAR, and based on this wind speed, the future wind speed is obtained. In this case, the measurement result by the forward anemometer may be used as is as the future wind speed, or may be corrected and then used as the future wind speed. In another embodiment, a prediction value of the wind speed (the future wind speed) that will impinge on the rotor 2 in the future is received from the outside of the wind turbine generator 1 and this prediction value is used as the future wind speed.

Further, in step S28, a physical quantity including weather information of the peripheral area of the wind turbine generator 1 (e.g. pressure distribution and wind speed distribution in the peripheral area at the present point and the like) may be obtained, or a physical quantity including the power output of another wind turbine generator located on the upwind side of the wind turbine generator 1 may be obtained.

Next, the future wind speed or the physical quantity obtained in step S28 is compared to the threshold value Wₜₕ set in step S22 (step S30).

In step S30, if the future wind speed or the physical quantity obtained in step S28 is not less than the threshold value Wₜₕ and it is predicted that the output of the generator 4 returns to a value at or above the lower limit in the prescribed time frame (YES in step S30), the process advances to step S32 to close the circuit breaker 8 and maintain the state where the generator 4 is connected to the grid 6 without being disconnected. In contrast, if the future wind speed or the physical quantity obtained in step S28 is below the threshold value Wₜₕ and it is predicted that the output of the generator 4 continues to remain below the lower limit in the time frame (NO in step S30), the process advances to step S34 to disconnect the generator 4 from the grid 6 by opening the circuit breaker 8.

As described above, according to the above embodiment, when the output of the generator 4 drops below the lower limit due to wind speed decline, the connection state of the generator 4 with respect to the grid 6 is determined based on the prediction result of whether or not the output of the generator 4 returns to a value at or above the lower limit in the prescribed time frame. In other words, even when the output of the generator 4 drops below the lower limit due to the wind speed decline, instead of unconditionally disconnecting the generator 4 from the grid 6, it is determined whether or not the generator 4 is to be disconnected by considering the prediction result on whether or not the output of the generator 4 returns to a value at or above the lower limit within the prescribed time frame. Therefore, it is possible to improve prompt restart of power generation and life of the circuit breaker 8 as well as reduction of power consumption due to motoring of the generator 4.

More specifically, even when the output of the generator 4 drops below the lower limit due to the wind speed decline, if it is predicted that the output of the generator 4 returns to a value at or above the lower limit in the prescribed time frame, the state where the generator 4 is connected to the grid 6 is maintained by controlling the circuit breaker using the circuit breaker controller 12. Thus, when the output of the generator 4 returns to a value at or above the lower limit in the time frame due to wind speed recovery, it is possible to promptly restart power generation by the generator 4 as the generator 4 is already connected to the grid 6. Further, the frequency of connecting or disconnecting the generator 4 with respect to the grid 6 is reduced. This improves life of the circuit breaker 8. In contrast, if it is predicted that the output of the generator 4 continues to remain below the lower limit in the time frame, the generator 4 is disconnected from the grid 6 by controlling the circuit breaker 8 using the circuit breaker controller 12. As a result, situations such as when the electric power from the grid 6 is wasted by motoring of the generator 4 in such a state that the generator 4 is maintained connected to the grid 6 although there is little possibility that the output of the generator 4 returns to a value at or above the lower limit by wind speed recovery.

While the embodiments of the present invention have been described, it is obvious to those skilled in the art that various changes may be made without departing from the scope of the invention. For instance, these embodiments may be appropriately combined.

In the exemplary embodiments illustrated in FIG.1 to FIG.3, it is assumed that the actual output of the generator 4 moves as predicted by the prediction unit 14. However, a mechanism for forcibly releasing the motoring state of the generator 4 in case of insufficient accuracy in the prediction step performed by the prediction unit 14 in the prediction step. More specifically, limit continuation time Tₗᵢₘᵢₜ which is greater than the allowable continuation time (the allowable motoring time) Tₜₒₗ is set beforehand and once the limit continuation time Tₗᵢₘᵢₜ lapses from the point when the output of the generator 4 has dropped below the lower limit. The circuit breaker controller 12 may forcibly disconnect the generator 4 from the grid 6 by opening the circuit breaker 8.

FIG.7 is a block diagram of the control unit of the wind turbine generator having the mechanism for forcibly disconnecting the generator 4 in the motoring state from the grid 6, according to an embodiment.

As shown in the drawing, a forcible disconnection determination unit 52 of the control unit 50 is configured to receive the actual output of the generator 4 and to determine whether or not the continuation time of the state where the output is below the lower limit exceeds the allowable continuation time Tₜₒₗ and reaches the limit continuation time Tₗᵢₘᵢₜ. Then, when the continuation time of the state where the output of the generator 4 is below the lower limit reaches the limit continuation time Tₗᵢₘᵢₜ, a forcible disconnection command for forcibly disconnecting the generator 4 in the motoring state is sent to the circuit breaker controller 12 from the forcible disconnection determination unit 52. Even while the motoring of the generator 4 is performed by maintaining the circuit breaker 8 in a closed state based on the prediction result of the prediction unit 14, once the forcible disconnection command is sent from the forcible disconnection determination unit 52, the circuit breaker controller 12 opens the circuit breaker to forcibly disconnect the generator 4 from the grid 6. Further, the forcible disconnection determination unit 52 may be configured to send an update signal of prediction determination standard along with the forcible disconnection command so as to update the prediction determination standard of the prediction unit 14 according to the update signal.

Further, in the exemplary embodiment illustrated in FIG.7, the control unit 50 is configured by the control unit 10 illustrated in FIG.1 and FIG.2 additionally provided with the forcible disconnection determination unit 52. However, the configuration of the control unit is not limited to this and the control unit 50 may be configured by the control unit 40 of FIG.3 additionally provided with the forcible disconnection determination unit 52.

### [Reference Numerals]

- 1: WIND TURBINE GENERATOR
- 2: ROTOR
- 2A: BLADE
- 2B: HUB
- 4: GENERATOR
- 6: GRID
- 8: CIRCUIT BREAKER
- 10: CONTROL UNIT
- 12: CIRCUIT BREAKER CONTROLLER
- 14: PREDICTION UNIT
- 16: FUTURE WIND SPEED OBTAINING UNIT
- 20: AC-DC-AC CONVERTER
- 22: CONVERTER
- 24: DC BUS
- 26: INVERTER
- 30: HYDRAULIC TRANSMISSION
- 32: HYDRAULIC PUMP
- 34: HYDRAULIC MOTOR
- 36: HIGH PRESSURE OIL LINE
- 38: LOW PRESSURE OIL LINE
- 40: CONTROL UNIT
- 42: CORRELATION OBTAINING UNIT
- 44: THRESHOLD SETTING UNIT
- 50: CONTROL UNIT
- 52: FORCIBLE DISCONNECTION DETERMINATION UNIT

## Claims

1. A wind turbine generator (1) comprising:
a rotor (2) configured to rotate upon receiving wind;
a generator (4) for converting rotational energy of the rotor (2) to electric power;
a circuit breaker (8) for changing a connection state of the generator (4) to a grid (6);
**characterized in that** :
the wind turbine generator (1) further comprises:
a circuit breaker controller (12) for controlling opening and closing of the circuit breaker (8) when output of the generator (4) becomes less than a lower limit based on a prediction result of whether or not the output of the generator (4) returns to a value at or above the lower limit in a time frame from a present point to a future point; and
a prediction unit (14) for predicting whether or not the output of the generator (4) returns to a value at or above the lower limit in the time frame based on at least one of a future wind speed impinging on the rotor, (2),
the circuit breaker controller (12) is configured to:
maintain such a state that the circuit breaker (8) is closed and the generator (4) is connected to the grid (6), when it is predicted that the output returns to a value at or above the lower limit in the time frame; disconnect the generator (4) from the grid (6) by opening the circuit breaker (8), when it is predicted that the output continues to remain less than the lower limit in the time frame; and
control opening and closing of the circuit breaker (8) based on a prediction result by the prediction unit (14).

2. The wind turbine generator (1) according to claim 1, further comprising:
a future wind speed obtaining unit (16) for obtaining the future wind speed,
wherein the prediction unit (14) is configured to predict whether or not the output of the generator (4) returns to a value at or above the lower limit in the time frame, based on at least the future wind speed obtained by the future wind speed obtaining unit (16).

3. The wind turbine generator (1) according to claim 1 or 2,
wherein the at least one physical quantity includes weather information of a peripheral area of the wind turbine generator (1), and
wherein the prediction unit (16) is configured to predict whether or not the output of the generator (4) returns to a value at or above the lower limit in the time frame, based on at least the weather information.

4. The wind turbine generator (1) according to any one of claims 1 to 3,
wherein the at least one physical quantity includes power output of another wind turbine generator (1) located on an upwind side of the wind turbine generator (1), and
wherein the prediction unit (14) is configured to predict whether or not the output of the generator (4) returns to a value at or above the lower limit in the time frame, based on at least the power output of said another wind turbine generator (1).

5. The wind turbine generator (1) according to any one of claims 1 to 4, further comprising:
a correlation obtaining unit (42) for obtaining a correlation between the at least one of the future wind speed or the at least one physical quantity and a period for the output of the generator (4) to return to a value at or above the lower limit; and
a threshold setting unit (44) for setting a threshold value of at least one of the future wind speed or the at least one physical quantity by applying to the correlation an allowable continuation time of such a state that the generator (4) whose output is less than the lower limit is connected to the grid (6),
wherein the prediction unit (14) is configured to predict whether or not the output of the generator (4) returns to a value at or above the lower limit in the time frame by comparing the at least one of the future wind speed and the at least one physical quantity with the threshold value.

6. The wind turbine generator (1) according to any one of claims 1 to 5,
wherein the generator (4) is a synchronous generator.

7. An operation method for a wind turbine generator (1) comprising: a rotor (2) configured to rotate upon receiving wind; a generator (4) for converting rotational energy of the rotor to electric power; and a circuit breaker (8) for changing a connection state of the generator (4) to a grid (6), the operation method **characterized by**:
a circuit breaker control step of controlling opening and closing of the circuit breaker (8) when output of the generator (4) becomes less than a lower limit based on a prediction result of whether or not the output of the generator (4) returns to a value at or above the lower limit in a time frame from a present point to a future point; and
a prediction step of predicting whether or not the output of the generator (4) returns to a value at or above the lower limit in the time frame based on at least one of a future wind speed impinging on the rotor (2);
wherein, in the circuit breaker control step,
when it is predicted that the output returns to a value at or above the lower limit in the time frame, such a state that the circuit breaker (8) is closed and the generator (4) is connected to the grid (6) is maintained;
when it is predicted that the output continues to remain less than the lower limit in the time frame, the generator (4) is disconnected from the grid (6) by opening the circuit breaker (8); and
opening and closing of the circuit breaker (8) is controlled based on a prediction result of the prediction step.

8. The operation method for the turbine generator (1) according to claim 7, further comprising:
a future wind speed obtaining step of obtaining the future wind speed,
wherein, in the prediction step, it is predicted whether or not the output of the generator (4) returns to a value at or above the lower limit in the time frame, based on at least the future wind speed obtained in the future wind speed obtaining step.

9. The operation method for the turbine generator (1) according to claim 7 or 8,
wherein the at least one physical quantity includes weather information of a peripheral area of the wind turbine generator (1), and
wherein, in the prediction step, it is predicted whether or not the output of the generator (4) returns to a value at or above the lower limit in the time frame, based on at least the weather information.

10. The operation method for the turbine generator (1) according to any one of claims 7 to 9,
wherein the at least one physical quantity includes power output of another wind turbine generator (1) located on an upwind side of the wind turbine generator (1), and
wherein, in the prediction step, it is predicted whether or not the output of the generator (4) returns to a value at or above the lower limit in the time frame, based on at least the power output of said another wind turbine generator (1).

11. The operation method for the turbine generator (1) according to any one of claims 7 to 10, further comprising:
a correlation obtaining step of obtaining a correlation between the at least one of the future wind speed or the at least one physical quantity and time that it has taken for the output of the generator (4) to return to a value at or above the lower limit; and
a threshold setting step of setting a threshold value of at least one of the future wind speed or the at least one physical quantity by applying to the correlation an allowable continuation time of such a state that the generator (4) whose output is less than the lower limit is connected to the grid (6),
wherein, in the prediction step, it is predicted whether or not the output of the generator (4) returns to a value at or above the lower limit in the time frame by comparing the at least one of the future wind speed or the at least one physical quantity with the threshold value.

12. The operation method for the turbine generator (1) according to any one of claims 7 to 11,
wherein the generator (4) is a synchronous generator.

13. A control unit (10) for a wind turbine generator (1) comprising: a rotor (2) configured to rotate upon receiving wind; a generator (4) for converting rotational energy of the rotor to electric power; and a circuit breaker (8) for changing a connection state of the generator (4) to a grid (6), the control unit (10) **characterized by** comprising:
a circuit breaker controller (12) for controlling opening and closing of the circuit breaker (8) when output of the generator (4) becomes less than a lower limit based on a prediction result of whether or not the output of the generator (4) returns to a value at or above the lower limit in a time frame from a present point to a future point; and
a prediction unit (14) for predicting whether or not the output of the generator (4) returns to a value at or above the lower limit in the time frame based on at least one of a future wind speed impinging on the rotor (2);
wherein the circuit breaker controller (12) is configured to:
maintain such a state that the circuit breaker (8) is closed and the generator (4) is connected to the grid (6), when it is predicted that the output returns to a value at or above the lower limit in the time frame;
disconnect the generator (4) from the grid by opening the circuit breaker (8), when it is predicted that the output continues to remain less than the lower limit in the time frame; and
control opening and closing of the circuit breaker (8) based on a prediction result by the prediction unit (14).

## Patentansprüche

1. Windturbinengenerator (1), umfassend
einen Rotor (2), der dafür konfiguriert ist, sich zu drehen, wenn Wind auf ihn trifft,
einen Generator (4) zum Umwandeln von Rotationsenergie des Rotors (2) in elektrische Leistung,
einen Leistungsschalter (8) zum Ändern eines Verbindungszustands des Generators (4) mit einem Energienetz (6),
**dadurch gekennzeichnet, dass**
der Windturbinengenerator (1) ferner umfasst:
eine Leistungsschalter-Steuereinheit (12) zum Steuern des Öffnens und Schließens des Leistungsschalters (8), wenn die Leistungsabgabe des Generators (4) eine Untergrenze unterschreitet, auf der Basis eines Vorhersageergebnisses, ob die Leistungsabgabe des Generators (4) innerhalb eines Zeitrahmens von einem gegenwärtigen Punkt bis zu einem zukünftigen Punkt auf einen Wert an oder über der Untergrenze zurückkehrt oder nicht, und
eine Vorhersageeinheit (14) zum Vorhersagen, ob die Leistungsabgabe des Generators (4) innerhalb des Zeitrahmens auf einen Wert an oder über der Untergrenze zurückkehrt oder nicht, auf der Basis einer auf den Rotor (2) auftreffenden zukünftigen Windgeschwindigkeit,
wobei die Leistungsschalter-Steuereinheit (12) konfiguriert ist zum:
Aufrechterhalten eines Zustands, in dem der Leistungsschalter (8) geschlossen ist und der Generator (4) mit dem Energienetz (6) verbunden ist, wenn vorhergesagt wird, dass die Leistungsabgabe innerhalb des Zeitrahmens auf einen Wert an oder über der Untergrenze zurückkehrt,
Trennen des Generators (4) von dem Energienetz (6) durch Öffnen des Leistungsschalters (8), wenn vorhergesagt wird, dass die Leistungsabgabe innerhalb des Zeitrahmens weiterhin unterhalb der Untergrenze bleibt, und
Steuern des Öffnens und Schließens des Leistungsschalters (8) auf der Basis eines Vorhersageergebnisses durch die Vorhersageeinheit (14).

2. Windturbinengenerator (1) nach Anspruch 1, ferner umfassend:
eine Zukünftige-Windgeschwindigkeit-Erhaltseinheit (16) zum Erhalten der zukünftigen Windgeschwindigkeit,
wobei die Vorhersageeinheit (14) dafür konfiguriert ist, mindestens auf der Basis der durch die Zukünftige-Windgeschwindigkeit-Erhaltseinheit (16) erhaltenen zukünftigen Windgeschwindigkeit vorherzusagen, ob die Leistungsabgabe des Generators (4) innerhalb des Zeitrahmens auf einen Wert an oder über der Untergrenze zurückkehrt oder nicht.

3. Windturbinengenerator (1) nach Anspruch 1 oder 2,
wobei die mindestens eine physikalische Größe Wetterinformationen eines Umgebungsbereichs des Windturbinengenerators (1) enthält und
wobei die Vorhersageeinheit (16) dafür konfiguriert ist, mindestens auf der Basis der Wetterinformationen vorherzusagen, ob die Leistungsabgabe des Generators (4) innerhalb des Zeitrahmens auf einen Wert an oder über der Untergrenze zurückkehrt oder nicht.

4. Windturbinengenerator (1) nach einem der Ansprüche 1 bis 3,
wobei die mindestens eine physikalische Größe eine Leistungsabgabe von einem anderen Windturbinengenerator (1) enthält, der sich auf einer dem Wind zugewandten Seite des Windturbinengenerators (1) befindet, und
wobei die Vorhersageeinheit (14) dafür konfiguriert ist, mindestens auf der Basis der Leistungsabgabe von dem anderen Windturbinengenerator (1) vorherzusagen, ob die Leistungsabgabe des Generators (4) innerhalb des Zeitrahmens auf einen Wert an oder über der Untergrenze zurückkehrt oder nicht.

5. Windturbinengenerator (1) nach einem der Ansprüche 1 bis 4, ferner umfassend
eine Korrelationserhaltseinheit (42) zum Erhalten einer Korrelation zwischen der zukünftigen Windgeschwindigkeit und/oder der mindestens einen physikalischen Größe und einem Zeitraum für die Leistungsabgabe des Generators (4) zum Zurückkehren auf einen Wert an oder über der Untergrenze, und
eine Schwelleneinstelleinheit (44) zum Einstellen eines Schwellenwertes der zukünftigen Windgeschwindigkeit und/oder der mindestens einen physikalischen Größe durch Anwenden, auf die Korrelation, einer zulässigen Fortsetzungszeit eines Zustands, in dem der Generator (4), dessen Leistungsabgabe geringer ist als die Untergrenze, mit dem Energienetz (6) verbunden ist,
wobei die Vorhersageeinheit (14) dafür konfiguriert ist, durch Vergleichen der zukünftigen Windgeschwindigkeit und/oder der mindestens einen physikalischen Größe mit dem Schwellenwert vorherzusagen, ob die Leistungsabgabe des Generators (4) innerhalb des Zeitrahmens auf einen Wert an oder über der Untergrenze zurückkehrt oder nicht.

6. Windturbinengenerator (1) nach einem der Ansprüche 1 bis 5,
wobei der Generator (4) ein Synchrongenerator ist.

7. Betriebsverfahren für einen Windturbinengenerator (1), umfassend: einen Rotor (2), der dafür konfiguriert ist, sich zu drehen, wenn Wind auf ihn trifft, einen Generator (4) zum Umwandeln von Rotationsenergie des Rotors in elektrische Leistung, und einen Leistungsschalter (8) zum Ändern eines Verbindungszustands des Generators (4) mit einem Energienetz (6), wobei das Betriebsverfahren **gekennzeichnet ist durch**:
einen Leistungsschalter-Steuerungsschritt des Steuerns des Öffnens und Schließens des Leistungsschalters (8), wenn die Leistungsabgabe des Generators (4) eine Untergrenze unterschreitet, auf der Basis eines Vorhersageergebnisses, ob die Leistungsabgabe des Generators (4) innerhalb eines Zeitrahmens von einem gegenwärtigen Punkt bis zu einem zukünftigen Punkt auf einen Wert an oder über der Untergrenze zurückkehrt oder nicht, und
einen Vorhersageschritt des Vorhersagens, ob die Leistungsabgabe des Generators (4) innerhalb des Zeitrahmens auf einen Wert an oder über der Untergrenze zurückkehrt oder nicht, auf der Basis einer auf den Rotor (2) auftreffenden zukünftigen Windgeschwindigkeit,
wobei in dem Leistungsschalter-Steuerungsschritt,
wenn vorhergesagt wird, dass die Leistungsabgabe innerhalb des Zeitrahmens auf einen Wert an oder über der Untergrenze zurückkehrt, ein Zustand, in dem der Leistungsschalter (8) geschlossen ist und der Generator (4) mit dem Energienetz (6) verbunden ist, beibehalten wird,
wenn vorhergesagt wird, dass die Leistungsabgabe innerhalb des Zeitrahmens weiterhin unterhalb der Untergrenze bleibt, der Generator (4) von dem Energienetz (6) durch Öffnen des Leistungsschalters (8) getrennt wird, und
das Öffnen und Schließen des Leistungsschalters (8) auf der Basis eines Vorhersageergebnisses des Vorhersageschrittes gesteuert wird.

8. Betriebsverfahren für den Turbinengenerator (1) nach Anspruch 7, ferner umfassend
einen Zukünftige-Windgeschwindigkeit-Erhaltsschritt zum Erhalten der zukünftigen Windgeschwindigkeit, wobei in dem Vorhersageschritt mindestens auf der Basis der in dem Zukünftige-Windgeschwindigkeit-Erhaltsschritt erhaltenen zukünftigen Windgeschwindigkeit vorhergesagt wird, ob die Leistungsabgabe des Generators (4) innerhalb des Zeitrahmens auf einen Wert an oder über der Untergrenze zurückkehrt oder nicht.

9. Betriebsverfahren für den Turbinengenerator (1) nach Anspruch 7 oder 8,
wobei die mindestens eine physikalische Größe Wetterinformationen eines Umgebungsbereichs des Windturbinengenerators (1) enthält und
wobei in dem Vorhersageschritt mindestens auf der Basis der Wetterinformationen vorhergesagt wird, ob die Leistungsabgabe des Generators (4) innerhalb des Zeitrahmens auf einen Wert an oder über der Untergrenze zurückkehrt oder nicht.

10. Betriebsverfahren für den Turbinengenerator (1) nach einem der Ansprüche 7 bis 9,
wobei die mindestens eine physikalische Größe eine Leistungsabgabe von einem anderen Windturbinengenerator (1) enthält, der sich auf einer dem Wind zugewandten Seite des Windturbinengenerators (1) befindet, und
wobei in dem Vorhersageschritt mindestens auf der Basis der Leistungsabgabe von dem anderen Windturbinengenerator (1) vorhergesagt wird, ob die Leistungsabgabe des Generators (4) innerhalb des Zeitrahmens auf einen Wert an oder über der Untergrenze zurückkehrt oder nicht.

11. Betriebsverfahren für den Turbinengenerator (1) nach einem der Ansprüche 7 bis 10, ferner umfassend
einen Korrelationserhaltsschritt zum Erhaltenen einer Korrelation zwischen der zukünftigen Windgeschwindigkeit und/oder der mindestens einen physikalischen Größe und der Zeit, die es dauert, bis die Leistungsabgabe des Generators (4) auf einen Wert an oder über der Untergrenze zurückkehrt, und
einen Schwelleneinstellschritt zum Einstellen eines Schwellenwertes der zukünftigen Windgeschwindigkeit und/oder der mindestens einen physikalischen Größe durch Anwenden, auf die Korrelation, einer zulässigen Fortsetzungszeit eines Zustands, in dem der Generator (4), dessen Leistungsabgabe geringer ist als die Untergrenze, mit dem Energienetz (6) verbunden ist,
wobei in dem Vorhersageschritt durch Vergleichen der zukünftigen Windgeschwindigkeit zu der mindestens einen physikalischen Größe mit dem Schwellenwert vorhergesagt wird, ob die Leistungsabgabe des Generators (4) innerhalb des Zeitrahmens auf einen Wert an oder über der Untergrenze zurückkehrt oder nicht.

12. Betriebsverfahren für den Turbinengenerator (1) nach einem der Ansprüche 7 bis 11,
wobei der Generator (4) ein Synchrongenerator ist.

13. Steuereinheit (10) für einen Windturbinengenerator (1), umfassend: einen Rotor (2), der dafür konfiguriert ist, sich zu drehen, wenn Wind auf ihn trifft, einen Generator (4) zum Umwandeln von Rotationsenergie des Rotors in elektrische Leistung, und einen Leistungsschalter (8) zum Ändern eines Verbindungszustands des Generators (4) mit einem Energienetz (6), wobei die Steuereinheit (10) **dadurch gekennzeichnet ist, dass** sie umfasst:
eine Leistungsschalter-Steuereinheit (12) zum Steuern des Öffnens und Schließens des Leistungsschalters (8), wenn die Leistungsabgabe des Generators (4) eine Untergrenze unterschreitet, auf der Basis eines Vorhersageergebnisses, ob die Leistungsabgabe des Generators (4) innerhalb eines Zeitrahmens von einem gegenwärtigen Punkt bis zu einem zukünftigen Punkt auf einen Wert an oder über der Untergrenze zurückkehrt oder nicht, und
eine Vorhersageeinheit (14) zum Vorhersagen, ob die Leistungsabgabe des Generators (4) innerhalb des Zeitrahmens auf einen Wert an oder über der Untergrenze zurückkehrt oder nicht, auf der Basis einer auf den Rotor (2) auftreffenden zukünftigen Windgeschwindigkeit,
wobei die Leistungsschalter-Steuereinheit (12) konfiguriert ist zum
Aufrechterhalten eines Zustands, in dem der Leistungsschalter (8) geschlossen ist und der Generator (4) mit dem Energienetz (6) verbunden ist, wenn vorhergesagt wird, dass die Leistungsabgabe innerhalb des Zeitrahmens auf einen Wert an oder über der Untergrenze zurückkehrt,
Trennen des Generators (4) von dem Energienetz durch Öffnen des Leistungsschalters (8), wenn vorhergesagt wird, dass die Leistungsabgabe innerhalb des Zeitrahmens weiterhin unterhalb der Untergrenze bleibt, und
Steuern des Öffnens und Schließens des Leistungsschalters (8) auf der Basis eines Vorhersageergebnisses durch die Vorhersageeinheit (14).

## Revendications

1. Aérogénérateur (1) comprenant :
un rotor (2) configuré pour tourner sous l'effet du vent ;
un générateur (4) pour convertir l'énergie de rotation du rotor (2) en énergie électrique ;
un disjoncteur (8) pour modifier un état de raccordement du générateur (4) à un réseau électrique (6) ;
**caractérisé en ce que** :
l'aérogénérateur (1) comprend en outre :
un organe de commande de disjoncteur (12) pour commander l'ouverture et la fermeture du disjoncteur (8) lorsque la sortie du générateur (4) devient inférieure à une limite inférieure en fonction d'un résultat de prévision consistant à savoir si la sortie du générateur (4) revient ou pas à une valeur supérieure ou égale à la limite inférieure dans une période de temps allant d'un instant présent à un instant futur ; et
une unité de prévision (14) pour prévoir si la sortie du générateur (4) revient ou pas à une valeur supérieure ou égale à la limite inférieure dans la période de temps en fonction au moins d'une parmi une vitesse de vent future affectant le rotor (2),
l'organe de commande de disjoncteur (12) est configuré pour :
maintenir un état tel que le disjoncteur (8) est fermé et le générateur (4) est raccordé au réseau électrique (6), lorsqu'il est prévu que la sortie revient à une valeur supérieure ou égale à la limite inférieure dans la période de temps ;
déconnecter le générateur (4) du réseau électrique (6) en ouvrant le disjoncteur (8), lorsqu'il est prévu que la sortie continue à rester inférieure à la limite inférieure dans la période de temps ; et
commander l'ouverture et la fermeture du disjoncteur (8) en fonction d'un résultat de prévision par l'unité de prévision (14).

2. Aérogénérateur (1) selon la revendication 1, comprenant en outre :
une unité d'obtention de future vitesse du vent (16) pour obtenir la future vitesse du vent,
dans lequel l'unité de prévision (14) est configurée pour prévoir si la sortie du générateur (4) revient ou pas à une valeur supérieure ou égale à la limite inférieure dans la période de temps, en fonction au moins de la future vitesse du vent obtenue par l'unité d'obtention de future vitesse du vent (16) .

3. Aérogénérateur (1) selon la revendication 1 ou 2,
dans lequel la au moins une quantité physique comprend des informations météorologiques d'une zone périphérique de l'aérogénérateur (1), et
dans lequel l'unité de prévision (16) est configurée pour prévoir si la sortie du générateur (4) revient ou pas à une valeur supérieure ou égale à la limite inférieure dans la période de temps, en fonction au moins des informations météorologiques.

4. Aérogénérateur (1) selon l'une quelconque des revendications 1 à 3,
dans lequel la au moins une quantité physique comprend la puissance en sortie d'un autre aérogénérateur (1) positionné du côté amont de l'aérogénérateur (1), et
dans lequel l'unité de prévision (14) est configurée pour prévoir si la sortie du générateur (4) revient ou pas à une valeur supérieure ou égale à la limite inférieure dans la période de temps, en fonction au moins de la puissance en sortie dudit autre aérogénérateur (1).

5. Aérogénérateur (1) selon l'une quelconque des revendications 1 à 4, comprenant en outre :
une unité d'obtention de corrélation (42) pour obtenir une corrélation entre la au moins une parmi la future vitesse du vent ou la au moins une quantité physique et une période de retour de la sortie du générateur (4) à une valeur supérieure ou égale à la limite inférieure ; et
une unité de fixation de seuil (44) pour fixer une valeur de seuil d'au moins une parmi la future vitesse du vent ou la au moins une quantité physique en appliquant pour la corrélation un temps de continuation admissible d'un état dans lequel le générateur (4), dont la sortie est inférieure à la limite inférieure, est raccordé au réseau électrique (6),
dans lequel l'unité de prévision (14) est configurée pour prévoir si la sortie du générateur (4) revient ou pas à une valeur supérieure ou égale à la limite inférieure dans la période de temps en comparant la au moins une parmi la future vitesse du vent et la au moins une quantité physique avec la valeur de seuil.

6. Aérogénérateur (1) selon l'une quelconque des revendications 1 à 5,
dans lequel le générateur (4) est un générateur synchrone.

7. Procédé de fonctionnement pour un aérogénérateur (1) comprenant : un rotor (2) configuré pour tourner sous l'effet du vent ; un générateur (4) pour convertir l'énergie de rotation du rotor en énergie électrique ; et un disjoncteur (8) pour modifier un état de raccordement du générateur (4) à un réseau électrique (6), le procédé de fonctionnement étant **caractérisé par** :
une étape de commande de disjoncteur pour commander l'ouverture et la fermeture du disjoncteur (8) lorsque la sortie du générateur (4) devient inférieure à une limite inférieure en fonction d'un résultat de prévision consistant à savoir si la sortie du générateur (4) revient ou pas à une valeur supérieure ou égale à la limite inférieure dans une période de temps d'un instant présent à un instant futur ; et
une étape de prévision pour prévoir si la sortie du générateur (4) revient ou pas à une valeur supérieure ou égale à la limite inférieure dans la période de temps en fonction au moins d'une parmi une future vitesse du vent affectant le rotor (2) ;
dans lequel, à l'étape de commande de disjoncteur,
lorsque l'on prévoit que la sortie revient à une valeur supérieure ou égale à la limite inférieure dans la période de temps, un état tel que le disjoncteur (8) est fermé et le générateur (4) est raccordé au réseau électrique (6), est maintenu ;
lorsque l'on prévoit que la sortie continue à rester inférieure à la limite inférieure dans la période de temps, le générateur (4) est déconnecté du réseau électrique (6) en ouvrant le disjoncteur (8) ; et
l'ouverture et la fermeture du disjoncteur (8) sont commandées en fonction d'un résultat de prévision de l'étape de prévision.

8. Procédé de fonctionnement pour l'aérogénérateur (1) selon la revendication 7, comprenant en outre :
une étape d'obtention de future vitesse du vent pour obtenir la future vitesse du vent,
dans lequel, à l'étape de prévision, on prévoit si la sortie du générateur (4) revient ou pas à une valeur supérieure ou égale à la limite inférieure dans la période de temps, en fonction au moins de la future vitesse du vent obtenue à l'étape d'obtention de vitesse du vent.

9. Procédé de fonctionnement pour l'aérogénérateur (1) selon la revendication 7 ou 8,
dans lequel la au moins une quantité physique comprend des informations météorologiques d'une zone périphérique de l'aérogénérateur (1), et
dans lequel, à l'étape de prévision, on prévoit si la sortie du générateur (4) revient ou pas à une valeur supérieure ou égale à la limite inférieure dans la période de temps, en fonction au moins des informations météorologiques.

10. Procédé de fonctionnement pour l'aérogénérateur (1) selon l'une quelconque des revendications 7 à 9,
dans lequel la au moins une quantité physique comprend la sortie de puissance d'un autre aérogénérateur (1) positionné sur le côté amont de l'aérogénérateur (1), et
dans lequel, à l'étape de prévision, on prévoit si la sortie du générateur (4) revient ou pas à une valeur supérieure ou égale à la limite inférieure dans une période de temps, en fonction au moins de la sortie de puissance dudit autre aérogénérateur (1).

11. Procédé de fonctionnement pour l'aérogénérateur (1) selon l'une quelconque des revendications 7 à 10, comprenant en outre :
une étape d'obtention de corrélation pour obtenir une corrélation entre la au moins une parmi la future vitesse du vent ou la au moins une quantité physique et le temps qui est pris pour que la sortie du générateur (4) revienne à une valeur supérieure ou égale à la limite inférieure ; et
une étape de fixation de seuil pour fixer une valeur de seuil d'au moins une parmi la future vitesse du vent ou la au moins une quantité physique en appliquant pour la corrélation un temps de continuation admissible d'un état dans lequel le générateur (4), dont la sortie est inférieure à la limite inférieure, est raccordé au réseau électrique (6),
dans lequel, à l'étape de prévision, on prévoit si la sortie du générateur (4) revient ou pas à une valeur supérieure ou égale à la limite inférieure dans la période de temps en comparant la au moins une parmi la future vitesse du vent ou la au moins une quantité physique avec la valeur de seuil.

12. Procédé de fonctionnement pour l'aérogénérateur (1) selon l'une quelconque des revendications 7 à 11,
dans lequel le générateur (4) est un générateur synchrone.

13. Unité de commande (10) pour un aérogénérateur (1) comprenant : un rotor (2) configuré pour tourner sous l'effet du vent ; un générateur (4) pour convertir l'énergie de rotation du rotor en énergie électrique ; et un disjoncteur (8) pour modifier un état de raccordement du générateur (4) à un réseau électrique (6), l'unité de commande (10) étant **caractérisée en ce qu'**elle comprend :
un organe de commande de disjoncteur (12) pour commander l'ouverture et la fermeture du disjoncteur (8) lorsque la sortie du générateur (4) devient inférieure à une limite inférieure en fonction d'un résultat de prévision consistant à savoir si la sortie du générateur (4) revient ou pas à une valeur supérieure ou égale à la limite inférieure dans une période de temps allant d'un instant présent à un instant futur ; et
une unité de prévision (14) pour prévoir si la sortie du générateur (4) revient ou pas à une valeur supérieure ou égale à la limite inférieure dans la période de temps en fonction au moins d'une parmi la future vitesse du vent sur le rotor (2) ;
dans laquelle l'organe de commande de disjoncteur (12) est configuré pour :
maintenir un état tel que le disjoncteur (8) est fermé et le générateur (4) est raccordé au réseau électrique (6), lorsqu'il est prévu que la sortie revient à une valeur supérieure ou égale à la limite inférieure dans la période de temps ;
déconnecter le générateur (4) du réseau électrique en ouvrant le disjoncteur (8), lorsqu'il est prévu que la sortie continue à rester inférieure à la limite inférieure dans la période de temps ; et
commander l'ouverture et la fermeture du disjoncteur (8) en fonction d'un résultat de prévision par l'unité de prévision (14).
